(19) Europäisches Patentamt
European Patent Office
Office européen des brevets

(11) EP 2 201 155 B1

(12) **EUROPEAN PATENT SPECIFICATION**

(45) Date of publication and mention of the grant of the patent:
**21.10.2015 Bulletin 2015/43**

(21) Application number: **08829432.7**

(22) Date of filing: **05.09.2008**

(51) Int Cl.:
***C25B 3/00*** *(2006.01)* ***C10L 1/02*** *(2006.01)*

(86) International application number:
**PCT/US2008/010434**

(87) International publication number:
**WO 2009/032312 (12.03.2009 Gazette 2009/11)**

# (54) METHOD FOR PRODUCING BIODIESEL USING AN ALKALI ION DONATING CATALYST

VERFAHREN ZUR HERSTELLUNG VON BIODIESEL UNTER VERWENDUNG EINES ALKALIIONEN ABGEBENDEN KATALYSATORS

PROCÉDÉ DE PRODUCTION DE BIODIESEL AU MOYEN D'UN CATALYSEUR DONNEUR D'IONS ALCALINS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.09.2007 US 970182 P**

(43) Date of publication of application:
**30.06.2010 Bulletin 2010/26**

(73) Proprietor: **Ceramatec, Inc.**
**Salt Lake City, UT 84119 (US)**

(72) Inventor: **JOSHI, Ashok**
**Salt Lake City, UT 84124 (US)**

(74) Representative: **Camenisch, Andrew Richard et al**
**HGF Limited**
**Belgrave Hall**
**Belgrave Street**
**Leeds LS2 8DD (GB)**

(56) References cited:
**EP-A1- 0 200 982**
**EP-A2- 1 126 011**
**WO-A2-2005/059205**
**GB-A- 1 600 750**
**US-A- 2 438 963**
**US-A1- 2007 158 205**
**US-A1- 2007 158 205**
**US-A1- 2007 167 642**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 201 155 B1

**Description**

FIELD OF THE INVENTION

The present disclosure relates to methods for the chemical synthesis of biodiesel. Generally, the methods use an alkali ion donating material to create an alkali alcoholate that reacts with triglycerides to form biodiesel and glycerine.

BACKGROUND OF THE INVENTION

Biodiesel is an alternative fuel source to petrodiesel, JP-8, and standard gasoline. Moreover, the use of biodiesel is growing in popularity and market penetration in the United States and worldwide. Current methods of making biodiesel are outlined in the publication *Biodiesel Production Technology,* NREL, July 2004 (NREL/SR-SIO-36244). Biodiesel may be defined as a petrodiesel equivalent processed fuel derived from biological sources. Typically, biodiesel is a fuel comprised of mono-alkyl esters of long chain fatty acids derived from triglycerides. A "mono-alkyl ester" is the product of the reaction of a straight chain alcohol (e.g., methanol or ethanol) with a triglyceride to form glycerine (also known as glycerine or glycerol) and the esters of long chain fatty acids. The triglycerides are commonly obtained from vegetable oils and animal fats of various origins. Biodiesel has a general formula R'OOCR, where R' is a straight chain lower alkyl (e.g., $C_1$ to $C_8$) and R is a hydrocarbon chain from $C_8$ to $C_{24}$.

One method of making biodiesel involves the reaction of triglycerides with methanol and with a hydroxide salt catalyst according to reaction (1) below.

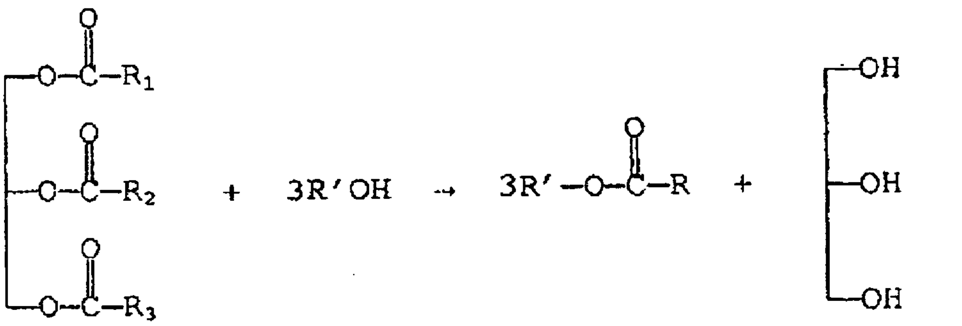

(1)

In reaction (I), R represents $R_1$, $R_2$, or $R_3$, which may each be the same or different $C_8$ to $C_{24}$ hydrocarbon chain. Additionally, R' represents an unbranched, straight-chain lower alkyl, such as a methyl or ethyl group.

The process of reaction (1) uses NaOH/KOH as a catalyst for the reaction between triglycerides and alcohol to form a two-phase, soapy, glycerol-based ester with biodiesel. The two-phase mixture is washed with water to separate out the biodiesel. This process can be cumbersome, complex, inefficient, and may elevate the cost of biodiesel.

Biodiesel may also be manufactured by reacting triglycerides with an alkali alkoxide (also known as an alkali alcoholate), such as alkali methoxide or alkali ethoxide, according to reaction (2) below.

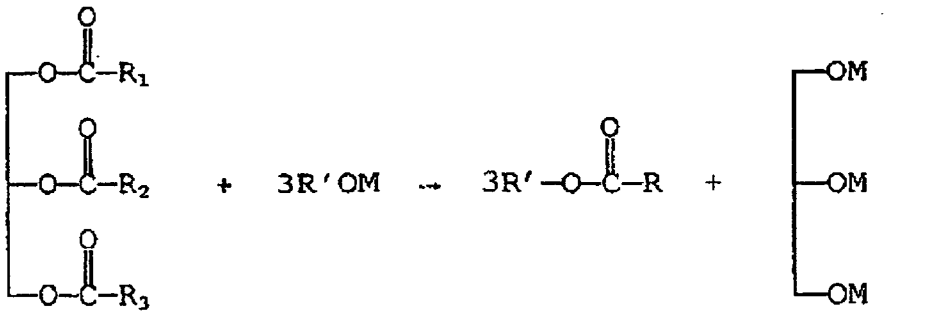

(2)

In reaction (2), R represents $R_1$, $R_2$, or $R_3$, each of which may be the same or different $C_8$ to $C_{24}$ hydrocarbon chain. Moreover, R' also represents an unbranched, straight chain lower alkyl, such as a methyl or ethyl group. M represents an alkali metal.

While the alkali alkoxide may be made in a variety of manners, Figure 1 shows a representative embodiment of an electrolytic cell 100 for preparing alkali alkoxides. As shown, the cell 100 uses an electrochemical reaction to form alkali alkoxides starting from a saline, aqueous catholyte and an alcoholic anolyte. The catholyte is stored in a cathode

compartment 102, and the anolyte is stored in an anode compartment 104. The cathode and anode compartments 102, 104 are separated by an ion selective membrane 106 that conducts only ions and is anolyte and catholyte-stable. The cell 100 also includes a cathode 108 and an anode 110. The alkali alkoxide is formed when electricity causes an alkali ion to pass from the aqueous cathode compartment 102 to the anode compartment 104 containing an alcohol through the ion selective membrane 106. This alkali alkoxide may then be mixed with a triglyceride to form biodiesel and an alkali salt of glycerine; which must be purified to form pure glycerine. (For a more detailed explanation of the synthesis of alkali alcoholates, *see* Ashok V. Joshi et al., Electolytic Method to Make Alkali Alcoholates, U.S. Patent Application Pub. No. 2008/0173551, filed Sept. 28, 2007).

Some industrial processes of manufacturing alkali alkoxides require a metallic alkali metal, such as sodium, or a mercury amalgam. Accordingly, such processes often have significant safety issues and/or often result in a product that is contaminated by mercury. Furthermore, some industrial processes for creating biodiesel and glycerine by reacting alkali alkoxides with triglycerides may require multiple reaction vessels and may require complex, expensive, or time consuming processes to remove alkali ions from the alkali salt of glycerine to form pure glycerine.

US 2007/0158205 discloses methods and apparatus for synthesizing biodiesel using alkali alkoxide generated on-site using an electrochemical process. The apparatus and methods disclosed in this document convert alkali salts of glycerine into glycerine and thereby facilitate the separation of clean glycerine from biodiesel. These methods are enabled by the use of alkali ion conductive ceramic membranes in electrolytic cells.

Thus, it would be an improvement in the art to provide improved apparatus and methods for the synthesis of biodiesel in a manner that addresses these and other considerations in order to provide potentially more economical production pathways. It would be an improvement in the art to produce biodiesel in a single reaction chamber. Additionally, it would be an improvement to produce biodiesel in a manner that simplifies the removal of alkali ions from the glycerine so as to produce substantially pure biodiesel and glycerine. Such apparatus and methods are provided herein.

## BRIEF SUMMARY OF THE INVENTION

The present application discusses methods for synthesizing biodiesel by using an alkali ion donating material that acts as a catalyst. Generally, these methods involve forming a mixture of triglycerides and alcohol in a container, contacting the mixture with an alkali ion donating material, treating the contents of the container with a biodiesel reaction driving force, and then removing the driving force from the container's contents.

Without being bound by theory, as the biodiesel reaction driving force is applied to the alkali ion donating material and the mixture) the alkali ion donating material releases alkali ions. These alkali ions react with the alcohol to form an alkali alcoholate, as shown in reaction (3) below.

$$R'OH + M^+ \rightarrow R'M + H^+ \qquad (3)$$

Where R' and M are defined above in relation to reaction (2).

As part of this reaction, the hydrogen atoms are released from the alcohol as protons, which are received by the alkali ion donating material. As the alkali alcoholates are formed in this process, they react with triglycerides in the mixture to form biodiesel and an alkali salt of glycerine.

The alkali ions may be removed from the alkali salt of glycerine to form a substantially pure form of glycerine in any suitable manner. In some cases, where the alkali ion donating material comprises a catalyst with a high affinity for alkali ions, the catalyst receives alkali ions associated with the alkali salt of glycerine and releases protons. In this manner, alkali ions are removed (or their removal rate is increased) from glycerine by the alkali ion donating catalyst material. For example, when the biodiesel reaction driving force is reduced or removed, the protons, which were received by the ion donating material while the driving force was applied, may be exchanged for the alkali ions of the alkali salt of glycerine. Once the biodiesel and glycerine have been produced, they may be separated from each other in any suitable manner, including through the use of a settling tank. Accordingly, the described methods may produce substantially pure biodiesel and glycerine, without permanently depleting the alkali ion donating material of alkali ions. Moreover, this process may further be completed through the use of an apparatus with a single reaction vessel or container.

In an aspect, the invention provides a method for producing biodiesel, the method comprising: providing a container comprising a single chamber which includes an anode and a cathode; placing an alcohol in the container; placing triglycerides in the container; providing the container with a material that is substantially insoluble in alcohol and capable of donating an alkali ion; causing the alcohol insoluble material to donate the alkali ion so that the alkali ion reacts with the alcohol to form an alkali alcoholate, wherein the alcohol insoluble material is caused to donate the alkali ion through applying an electrical potential via the anode and cathode to the alcohol insoluble material; and allowing the alkali alcoholate to react with the triglyceride to form a composition comprising biodiesel.

The container may comprise any component or characteristic that is suitable for the production of biodiesel and glycerine through the described methods. The container has a single, undivided chamber in which the alcohol, triglycerides, and alkali ion donating material can be placed.

The alkali ion donating material can comprise any suitable number of a variety of materials that will release alkali ions (e.g., lithium, potassium, and/or sodium) when the biodiesel reaction driving force is applied to it. For instance, the alkali ion donating material may be a catalyst and/or a material in which the alkali ion content is at least partially and permanently consumed during the synthesis of biodiesel. Some non-limiting examples of suitable alkali ion donating catalysts include ceramic ionic conductors (e.g., sodium super ionic conductors or NASICON® conductors), sulfonated tetrafluorethylene copolymers (e.g., NAFION® cationic conductors), stoichiometric, and non-stoichiometric beta alumina (e.g., a conventional sodium beta alumina ceramic material). Some non-limiting examples of an alkali ion donating material that is consumed as it releases alkali ions is sodium carbonate, sodium nitrite, sodium nitrate, sodium bicarbonate, sodium sulfide, and/or other similar compounds.

The alkali ion donating material may have any characteristic that allows it to fulfil its intended purpose. In one example, the alkali ion donating material can be substantially insoluble in alcohol, impervious to water, uninfluenced by scaling or precipitation, and/or have other desired characteristics. In another example, the alkali ion donating material may also have any suitable physical form, including a spherical, granular, cylindrical, powder, or other suitable form.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but does not necessarily, refer to the same embodiment, but may refer to every embodiment.

Furthermore, the described features, advantages, and characteristics of the described apparatus and methods may be combined in any suitable manner in one or more embodiments. One skilled in the relevant art will recognize that the apparatus and methods may be practiced without one or more of the specific features or advantages of a particular embodiment. In other instances, additional features and advantages may be recognized in certain embodiments that may not be present in all embodiments.

These features and advantages of the described methods and apparatus will become more fully apparent from the following description and appended claims, or may be learned by the practice of the apparatus and methods as set forth hereinafter.

BRIEF DESCRIPTION OF THE SEVERAL VIEWS OF THE DRA W.INGS

In order that the manner in which the above-recited and other features and advantages of the apparatus and methods for producing biodiesel are obtained will be readily understood, a more particular description of the apparatus and methods briefly described above will be rendered by reference to specific embodiments thereof that are illustrated in the appended drawings. Understanding that these drawings depict only typical embodiments and are not therefore to be considered as limiting in scope, the apparatus and methods for producing biodiesel will be described and explained with additional specificity and detail through the use of the accompanying drawings in which:

Figure 1 provides a general schematic view of a representative embodiment of a prior art electrolytic apparatus for producing alkali alkoxides;

Figure 2 provides a schematic view of a representative embodiment of the apparatus for producing biodiesel, wherein the apparatus comprises an alkali ion donating material. This figure does not fall within the scope of the claims;

Figure 3 provides a schematic view of a representative embodiment of the apparatus for producing biodiesel, wherein the apparatus comprises an alkali ion donating material, an anode, and a cathode;

Figure 4 provides a schematic view of a representative embodiment of the apparatus for producing biodiesel, wherein the apparatus comprises an alkali ion donating catalyst, an alkali ion donating material that is consumed as it releases alkali ions, an anode, and a cathode;

Figure 5 provides a schematic view of a representative embodiment of an apparatus for producing biodiesel, wherein the apparatus comprises a plurality of alkali ion donating materials, anodes, and cathodes;

Figure 6 provides a flow chart illustrating a representative embodiment of a method for producing biodiesel; and

Figure 7 provides a flow chart illustrating a representative embodiment of a method for producing biodiesel.

DETAILED DESCRIPTION OF THE INVENTION

The presently preferred embodiments will be best understood by reference to the Figures, wherein like parts may be designated by like numerals throughout. It will be readily understood that the components of the present invention,

as generally described and illustrated in the Figures herein, could be arranged and designed in a wide variety of different configurations. Thus, the following more detailed description of the embodiments of the apparatus and methods of the described apparatus and methods, as represented in Figures 1 and 3 through 7, is not intended to be limiting in scope, but is merely representative of some presently preferred embodiments.

Various apparatus and methods for producing substantially pure biodiesel and glycerine are described herein. Generally, the methods involve placing one or more alcohols and triglycerides into an apparatus for producing biodiesel, wherein the apparatus comprises an alkali ion donating material or an alkali ion donator. A biodiesel reaction driving force (i.e. an electric potential, and optionally heat, pressure, etc.) is applied to the contents of the apparatus. Under a non-binding theory, this driving force causes the alkali ion donator to, at least temporarily, release alkali ions into the contents of the apparatus. In turn, these alkali ions may react with the alcohol in a manner that causes the alkali ion to be substituted for the hydrogen atom in the alcohol's hydroxyl group(s). In other words, the alkali ion reacts with the alcohol to produce an alkali alcoholate and to release protons into the contents of the apparatus. Such a chemical reaction is shown below:

$$12R'OH + 12M^{+} \rightarrow 12R'OM + 12H^{+}$$

In this chemical reaction, R' represents an unbranched, straight chain lower alkyl (e.g., $C_1$ to $C_8$); M represents an alkali atom; and R'OM represents an alkali alcoholate.

Under this theory, the protons ($H^+$) in the mixture are substantially received by the alkali ion donating material. Moreover, the alkali alcoholates react with triglycerides in the apparatus to produce biodiesel and an alkali salt of glycerine, as shown below:

$$12R'OM + 4[C_3H_5O_3][OCR]_3 \rightarrow 12R'OOCR + 4C_3H_5(OM)_3$$

In this chemical reaction, $[C_3H_5O_3][OCR]_3$ represents a triglyceride in which R represents the same or different hydrocarbon chain selected from $C_8$ to $C_{24}$. Additionally, in this reaction, R'OOCR represents biodiesel and $C_3H_5(OM)_3$ represents the alkali salt of glycerine.

The production of biodiesel and alkali salts of glycerine can continue until a limiting reactant is consumed, dynamic equilibrium is achieved, or the driving force is reduced or stopped from applying energy to the apparatus's contents. At that point, the alkali ions of the alkali salt of glycerine can be removed and replaced with hydrogen to form pure glycerine or substantially pure glycerine. For instance, in embodiments where the alkali ion donator comprises a catalyst with a high affinity for alkali ions, the reduction or removal of the driving force may allow the alkali ions ($M^+$) in the alkali salts of glycerine to be exchanged with the protons ($H^+$) that were received by the alkali ion donator during the application of the driving force. In such embodiments, the final mixture in the apparatus comprises substantially pure biodiesel (R'OOCR) and substantially pure glycerine ($C_3H_5(OH)_3$).

The overall chemical reaction that occurs when the alkali ion donator acts as a catalyst may be summarized as follows:

$$12R'OH + 4[C_3H_5O_3][OCR]_3 \rightarrow 12R'OOCR + 4C_3H_5(OH)_3$$

Once the substantially pure biodiesel and glycerine have been synthesized, the two may be separated through the use of any known or novel technique. For instance, the two may be allowed to settle so that the lighter biodiesel may separate by gravity from the heavier glycerine phase.

To provide a better understanding of the described apparatus and methods for synthesizing biodiesel using an alkali ion donating catalyst, a description of the triglycerides, alcohol, and the apparatus for producing biodiesel in the described manner is given below.

Generally, triglycerides added to the apparatus may comprise any form of triglyceride that can be transesterified to form biodiesel alkyl esters. As used herein, the term transesterified or transesterification may refer to the exchanging of an alkoxyl group of an ester compound for a different alcohol group. Some non-limiting examples of suitable sources of triglycerides may include animal fats (e.g., from beef and sheep tallow, poultry oil, fish oil, etc.), vegetable oil (e.g., from rapeseed, soybeans, Jatropha, mustard, flax, sunflower, palm, hemp. etc.), or other sources of fatty acids (e.g., algae). Although, in some embodiments, only a single form of triglyceride is added to the apparatus during the production of biodiesel, in other embodiments, multiple forms of triglycerides may be used at any suitable concentration.

The alcohol added to the apparatus may comprise virtually any alcohol that can be reacted with an alkali ion to form an alkali alcoholate that is capable of being reacted with a triglyceride to synthesize biodiesel. Generally, however, the alcohol is a straight chain, lower alkyl alcohol, $C_1$, to $C_8$, that may be substituted or unsubstituted. Additionally, the alcohol may contain more than one hydroxyl moiety. Examples of typical alcohols that may be used include, but are not limited to, methanol, ethanol, propanol, isopropanol, butanol, hexanol, ethylene glycol, and propylene glycol. Indeed, in

some embodiments, the preferred alcohol comprises methanol or ethanol. Nevertheless, in other embodiments, such as where increased cold flow capability of the biodiesel is desired, somewhat higher alcohols, such as isopropanol or butanol may be preferred. Additionally, while the use of a single alcohol may be preferred in some embodiments, the skilled artisan will recognize that more than one alcohol may be used at the same time, at any suitable concentration, in the described apparatus and methods for producing biodiesel.

The apparatus for producing biodiesel may comprise any component or characteristic that allows biodiesel and glycerine to be formed therein, in the described manner. By way of example, Figure 2 shows an apparatus for producing biodiesel 200 comprises a container 202, an alkali ion donator 204, and a mechanism for applying the biodiesel reaction driving force 206. To provide a better understanding of the apparatus, each of the aforementioned components is described below in more detail.

The container may comprise any characteristic that allows it to fulfil its intended house chemicals suitable for the production of biodiesel according to the described methods. For instance, Figure 2 shows the container 202 comprises a chamber 208. Unlike some prior art devices that necessarily comprise multiple chambers for separating various reactants, Figure 2 shows that, in at least some embodiments, the container 202 comprises a single chamber 208 in which any or all of the reactants, byproducts, and/or products of the described methods may be mixed. Indeed, the chamber may function as intended while housing the alcohol, triglycerides, and/or alkali ion donating material as well as any intermediates, byproducts, and/or products of the described methods for synthesizing biodiesel.

The container can be made of any suitable material, including metal, glass, plastic, composite, ceramic, other material, or combinations of the foregoing. Additionally, in some embodiments, the materials that form any part of the container are not reactive with or substantially degraded by exposure to the process of producing biodiesel.

The alkali ion donator may comprise one or more of a variety of materials that are capable of at least temporarily donating an alkali ion to react with the alcohol to form an alkali alcoholate that can cause the transesterification of a triglyceride. As used herein, the term alkali ion may refer to the cationic ion of any alkali metal (e.g., sodium, lithium, and potassium) that can react with an alcohol to form an alkali alchoholate. Some examples of suitable alkali ion donators include alkali ion donating catalysts and alkali ion donators in which the content of alkali ions are at least partially and permanently consumed during the production of biodiesel, Additionally, because the alkali ion donator is used in the presence of alcohol, in some preferred embodiments, the alkali ion donator is substantially insoluble in alcohol.

Where the alkali ion donator comprises an alkali ion donating catalyst, the catalyst may comprise any suitable material that can act as a catalyst in the described methods. Said differently, the alkali ion donating catalyst may comprise virtually any material that is capable of releasing alkali ions under a driving force and then, through the material's high alkali ion affinity, receiving the ions so as to prevent them from attaching or staying attached to a byproduct of the biodiesel reaction when the driving force is removed. Examples of suitable alkali ion donating catalysts comprises an alkali intercalation material, such as $NaFePO_4$, $LiFePO_4$, Na intercalated into carbon, and Li intercalated into carbon. Another example of a suitable type of alkali ion donating catalyst comprises alkali ion conductors. Some non-limiting examples of such may comprise sodium super ionic conductors (e.g., NaSICON conductors produced by Ceramatec, Inc. of Salt Lake City, UT), sulfonated tetrafluorethylene copolymers (e.g., NAFION® cationic conductors produced by DuPont Fluoroproducts, Inc. of Fayetteville, NC), or other stoichiometric and nonstoichiometric beta alumina materials that have suitable alkali ion donating properties.

In some embodiments, ceramic ionic conductors may be the preferred alkali ion donator. Indeed, such materials may have several characteristics that make them especially well suited for use in the described apparatus. For example, as previously mentioned, NaSICON and NAFION® may have good ion-donating characteristics under the application of biodiesel reaction driving force, even at low temperatures. Similarly, such conductors may have a high affinity and selectivity for alkali ions when the driving force is removed or reduced. Thus, such materials may donate alkali ions to form alkali alcoholates and then remove or prevent alkali ions from bonding to byproducts of the biodiesel reaction so as to form substantially pure biodiesel and glycerine. Moreover, due to the alkali ion donator's high affinity, the alkali ion donator may be used in multiple reactions and retain a substantially equal alkali ion load from reaction to reaction. Additionally, ceramic ionic conductors, such as NAFION® conductors, may be loaded with alkali ions (e.g., $Na^+$) before use as the alkali ion donating material. Ceramic ionic conductors may also be dense, substantially impervious to water transport, and be substantially uninfluenced by scaling or precipitation of divalent ions, trivalent ions, tetravalent ions, or dissolved solids present in apparatus. Other examples of advantageous characteristics are that some ceramic ionic conductors do not degrade in the presence of corrosive elements and may function as intended over a wide pH range (e.g., about 2 to about 14).

Where the ceramic ionic conductor comprises a NaSICON conductor, any NaSICON conductor capable of acting as an alkali ion donating catalyst, as described herein, may be used. NaSICON-type ionic conductors are known in the art. A non-limiting disclosure of such materials is provided by H. Y-P. Hong, "Crystal Structure and Crystal Chemistry in the System Na1+xZr1SixP3-xO12, Mat. Res. Bull, Vol. 11, pp. 173-182, 1976. For instance, some preferred stoichiometric and non-stoichiometric NaSICON type materials may include those having the formula $M^1M^2A(BO_4)_3$ where $M^1$ and $M^2$ may be independently chosen from Li, Na, and K, and where A and B include metals and main group elements.

For additional information regarding NaSICON conductors (also known as membranes), see Shekar Balagopal et al., Synthesis of Biodiesel Using Alkali Ion Conductive Ceramic Membranes, U.S. Patent Application No. 2007/0158205, filed January 11, 2007. While the foregoing discussion relates to NaSICON-type materials, it will be appreciated that other alkali super ion conducting materials which transport lithium and potassium ions, are known and may be utilized in place of sodium super ion conducting materials.

As previously mentioned, the alkali ion donator may comprise a material that is partially consumed, or in which its content of alkali ions is permanently reduced, as part of the biodiesel reaction. Such a material may comprise a variety of materials that are capable of donating alkali ions when the biodiesel reaction driving force is applied to it. Some non-limiting examples of such an alkali ion donator is sodium carbonate, sodium nitrite, sodium nitrate, sodium bicarbonate, sodium sulfide, and/or other similar compounds.

No matter the type of alkali ion donator used in the described apparatus and methods, the alkali ion donator may be in any suitable physical form, including a granular, spherical, block, plate, sheet, powder, chunk, bead, filament, or other desired form. For example, Figure 2 shows a bead form of the alkali ion donator 204 is placed in the container 202. In contrast, Figure 3 shows some embodiments in which a plate form of the alkali ion donator 304 is placed in the container 302.

The biodiesel reaction driving force is electric potential and may optionally include heat, pressure, another suitable form of energy, or combinations thereof. Accordingly, the mechanism for applying the biodiesel reaction driving force, or the driving mechanism, may be any mechanism that is suitable for use with the described apparatus and capable of producing a suitable level of one or more of the described biodiesel reaction driving forces.

The driving mechanism may include a heater. Such a heater may comprise any mechanism that is capable of raising the temperature of one or more of the contents of the apparatus 200 enough to cause the alkali ion donator 204 to release alkali ions. For instance, such a heater may raise the temperature of one or more components of the container to a temperature selected from between 100°C and 800°C, 200°C and 600°C, and 100°C and 500°C. Some examples of suitable heaters may comprise a conventional heater (e.g., a heat coil, a flame, an infrared radiant heat burner, etc.) or a mechanism capable of providing microwave energy to the contents of the apparatus.

Although Figure 2 depicts an open container 202, it will be understood that in other embodiments, the container 202 is sealable and capable of being pressurized. In one example, the container comprises a lid or hatch that is capable of retaining pressure inside the container. In another example, the apparatus also comprises a pump/compressor that can increase the container's interior pressure. Indeed, the apparatus may comprise any mechanism suitable to pressurize the alkali ion donator enough to cause the donator to release alkali ions. Indeed, in some embodiments, the driving mechanism is capable of pressurizing one or more contents of the container to a pressure selected from 1 bar to 50 bar, 2 and 20, and 5 and 10.

The electric potential may be applied to one or more contents of the container (e.g., the alkali ion donating material) in any suitable manner. By way of illustration, Figure 3 illustrates some embodiments of the apparatus 300 in which an electrical potential is applied to one or more contents of the container 302 through the use of a cathode 305 and an anode 306. In such embodiments, electric potential from the electrodes (305 and 306) drives alkali ions from the alkali ion donating material 304 (e.g., a NaSICON or NAFION® conductor). As in the case of the other biodiesel reaction driving forces, when the electric potential is removed from the container's contents, the biodiesel driving force no longer causes alkali ions to be released from the alkali ion donating material. Moreover, if the alkali ion donating material comprises an alkali ion donating catalyst, the alkali ions (e.g., $Na^+$) may be allowed to return to the host lattice.

The apparatus comprises a cathode and anode (e.g., 305 and 306, respectively), where the electrodes comprise suitable electrical conductors and are preferably stable in the media to which they are exposed. Indeed, in such embodiments, the electrodes may comprise any suitable material, and the material may be solid, plated, perforated, expanded, or otherwise adapted for a desired use. By way of non-limiting example, some suitable materials for the formation of the anode may comprise stainless steel, lead, graphite, tungsten carbide, titanium diboride, nickel, cobalt, nickel tungstate, nickel titanate, platinum, and/or a noble anode metal, as a solid plated on a substrate, such as platinum-plated titanium. In one example, the anode comprises a dimensionally stable anode (DSA), which is comprised of ruthenium oxide coated titanium. Similarly, some non-limiting examples of suitable cathode materials may include metals (e.g. nickel, cobalt, platinum, silver, and the like) and alloys (e.g., titanium carbide) with small amounts of nickel, $FeAl_3$, $NiAl_3$, stainless steel, perovskite ceramics, and/or other suitable materials. Of course, the skilled artisan will recognize that, in some instances, by balancing electrical efficiency with the low cost of specific electrode materials, the materials used to form the electrodes can be chosen to maximize cost efficiency effectiveness.

In addition to the previously mentioned electrode materials, in some embodiments, one or more of the electrodes comprises at least one suitable alkali ion donator. Indeed, in some preferred embodiments, one or more of the electrodes comprise an alkali ion donating catalyst, such as a NaSICON or NAFION® conductor. Where an electrode comprises an alkali ion donator, the donator may be incorporated in the electrode in any suitable way. For instance, the alkali ion donating material may be mixed into the materials forming the electrode, contained in the electrode, coated on the electrode, and/or otherwise be associated with the electrode.

In addition to the previously described components and characteristics, the apparatus may be modified in any suitable manner. For instance, the apparatus may comprise more than one alkali ion donator. The presence of multiple alkali ion donators may be beneficial because it can increase the reaction rate and efficiency as well as increase the amount of reactants that may be treated in the apparatus. By way of illustration, Figure 4 shows some embodiments where the apparatus 400 includes multiple alkali ion donators. Although the apparatus may comprise any suitable number of alkali ion donators, Figure 4 shows a representative embodiment in which the apparatus 400 comprises 3 alkali ion donators 404 and 408.

Where the apparatus comprise more than one alkali ion donator, each donator may comprise the same or different type of alkali ion donating material. For instance, the apparatus may comprise multiple donators that are formed from the same type of alkali ion donator (e.g., multiple pieces of NAFION® conductor). In contrast, Figure 4 illustrates some embodiments where the apparatus 400 comprises different types of alkali ion donating materials 404 and 408. In such embodiments, the apparatus may comprise any suitable combination of alkali ion donating materials. In one example, the first alkali ion donator 404 comprises a first alkali ion donating catalyst 404 (e.g., a NaSICON conductor) and the second alkali ion donator 408 comprises a second alkali ion donating catalyst (e.g., a NAFION® conductor). In a second example, however, the first alkali ion donator 404 comprises an alkali ion donating catalyst (e.g., a NaSICON conductor) and the second alkali ion donator 408 comprises a material that is consumed during the synthesis of biodiesel (e.g., sodium carbonate). As a side note, in this second example, when a biodiesel reaction driving force is applied to sodium carbonate, a sodium ion ($Na^+$) may be released to react with an alcohol to form a sodium alcoholate. As the sodium ion is released, carbon dioxide may be evolved and captured. Once the driving force is reduced or removed, the sodium ions donated by the sodium carbonate (e.g., alkali ion donator 408) may be received or captured by the alkali ion donating catalyst 404. In this manner, the sodium ions may act to remove alkali ions from the alkali salt of glycerine or the alkali ions may be prevented from "dirtying" the resulting glycerine.

In some embodiments, the apparatus comprises more than one driving mechanism. In such embodiments, the apparatus may comprise any suitable number of driving mechanisms. Multiple driving mechanisms may allow the apparatus to increase the rate and efficiency of the biodiesel reaction. Similarly, multiple driving mechanism may allow the apparatus to treat a larger amount of reactants than may a single driving force. In another example, the apparatus comprises a driving mechanism that heats, pressurizes, and applies an electrical potential to the contents of the container. In still another example, Figure 5 shows some embodiments where the apparatus 500 comprises a plurality of the same type of driving mechanism, namely a plurality of cathodes 305 and anodes 306. In so doing, Figure 5 shows that where the apparatus 500 comprises more than a single driving mechanism, the driving mechanisms (e.g., cathodes 305 and anodes 306) may each, though not necessarily, be used with a separate alkali ion donator (e.g., alkali ion donator 308).

The described apparatus may be used in any suitable method. By way of non-limiting example, Figure 6 shows some embodiments of a typical method 600 for producing biodiesel using an alkali ion donating catalyst. Specifically, after beginning at 602, the method continues at 604 by providing a container for housing an alcohol and a triglyceride. Next, at 606, the method continues by placing an alcohol insoluble alkali donating catalyst in the container. This catalyst is then contacted with a tricylceride and an alcohol, as shown at 608 and 610. At this point, a biodiesel reaction driving force (e.g., the heat shown at 612, the pressure shown at 614, and/or the electrical potential shown at 616) may be applied to the mixture of triglyceride and alcohol. As previously stated, this driving force may cause the formation of biodiesel and an alkali salt of glycerine. Once the driving force is removed at 620, the apparatus may contain substantially pure biodiesel and substantially pure glycerine. The method may then be ended at 622.

Of course, the described methods may involve other steps and methods that are equivalent in function or effect to one or more portions of the method illustrated in Figure 6. Moreover, the order in which a particular method occurs may be changed in any suitable manner. By way of example, Figure 7 illustrates other embodiments of the described method for producing biodiesel in which the biodiesel driving force is applied before the triglyceride is placed in the container. In particular, the method of Figure 7 shows that after the method 700 begins at 702, it may continue by providing a container (shown at 704), placing an alcohol insoluble alkali ion donating catalyst in the container (shown at 706), and placing an alcohol in the container with the catalyst (shown at 708). At this point, the biodiesel reaction driving force (e.g., heat in box 710, the pressure in box 712, or the electrical potential in box 714) may be applied to the alcohol and catalysts to form an alkali alcoholate. After the application of the driving force, or while it is still being applied, 716 shows the triglyceride may be added to the container to react with the alkali alcoholates and form biodiesel, shown at 718. If it has not already been removed, the biodiesel reaction driving force may be removed at 720 to form a composition comprising substantially pure biodiesel and glycerine. The method may then be ended at 722.

In some embodiments of the described methods and apparatus, the apparatus may be operated in a continuous mode. In a continuous mode, the apparatus may be operated in any suitable manner. For example, the container may initially be filled with an alcohol, a triclyceride, and an alkali ion donator. Then, during operation, additional reagents may be fed into the container and products, by-products, and/or diluted solutions may be removed from the container without ceasing operation of the cell. The feeding of the reagents into the container may be done continuously or it may be done intermittently, meaning that the flow of a given reactant is initiated or stopped according to the need for the reactant

and/or to maintain desired concentrations of reactants in the container, without emptying the container. Similarly, the removal of compositions from the container may also be continuous or intermittent.

Control of the addition and/or removal of chemicals from the container may be done by any suitable means. Such means may include manual operation, such as by one or more human operators, and automated operation, such as by using sensors, electronic valves, laboratory robots, etc. operating under computer or analog control. In automated operation, a valve or stopcock may be opened or closed according to a signal received from a computer or electronic controller on the basis of a timer, the output of a sensor, or other means. Examples of automated apparatus are well known in the art. Some combination of manual and automated operation may also be used. Alternatively, the amount of each chemical that is to be added or removed per unit of time to maintain a steady state may, be experimentally determined for a given apparatus, and the flow of chemicals into and out of the apparatus may be set accordingly to achieve the steady state flow conditions.

In another embodiment, the apparatus is operated in batch mode. In batch mode, the reagents are fed into the container and the container is operated until the desired concentration of product is produced. The container is then emptied, the product collected, and the container refilled to start the process again. Alternatively, combinations of continuous mode and batch mode production may be used. Also, in either mode, the feeding of chemicals (e.g., triglycerides and alcohols) may be done using a pre-prepared solution or using components that form the desired mixture in situ.

As mentioned throughout, the described apparatus and methods may offer several advantages and benefits over some conventional apparatus and methods for producing biodiesel. By way of example, the described methods and apparatus may include a single chamber in which both the alkali alcoholate, the biodiesel and, the glycerine are produced. According, the described apparatus and methods may be simple and relatively inexpensive. Additionally, because the apparatus may include an alkali ion donating catalyst, the apparatus may efficiently and effectively produce pure glycerine, while allowing the catalyst maintain a substantially constant alkali ion concentration between multiple biodiesel reactions.

## Claims

1. A method for producing biodiesel, the method comprising:

    providing a container comprising a single chamber which includes an anode and a cathode;
    placing an alcohol in the container;
    placing triglycerides in the container;
    providing the container with a material that is substantially insoluble in alcohol and capable of donating an alkali ion;
    causing the alcohol insoluble material to donate the alkali ion so that the alkali ion reacts with the alcohol to form an alkali alcoholate, wherein the alcohol insoluble material is caused to donate the alkali ion through applying an electrical potential via the anode and cathode to the alcohol insoluble material; and
    allowing the alkali alcoholate to react with the triglyceride to form a composition comprising biodiesel.

2. The method of claim 1, wherein the alcohol insoluble material is caused to donate the alkali ion through a further treatment selected from heating the alcohol insoluble material and pressurizing the alcohol insoluble material.

3. The method of claim 2, wherein the composition is heated to a temperature within a temperature range selected from 100°C and 800°C, from 200°C and 600°C, and from 100°C and 500°C, or wherein the composition is pressurized to a pressure within a pressure range selected from 1 bar to 50 bar, from 2 and 20, and from 5 and 10.

4. The method of claim 3, further comprising when the composition is pressurized allowing the alkali donating catalyst to remove alkali ions from alkali salts of glycerine to form substantially pure biodiesel and pure glycerine, preferably wherein the alkali donating catalyst comprises an alkali super ion conductor.

5. The method of claim 1, wherein an alkali ion content of the alcohol insoluble material is permanently consumed as it donates the alkali ion.

## Patentansprüche

1. Verfahren zur Herstellung von Biodiesel, wobei das Verfahren:

die Bereitstellung eines Behälters, umfassend eine einzelne Kammer, in der eine Anode und eine Kathode enthalten sind;
das Einbringen von Alkohol in den Behälter;
das Einbringen von Triglyzeriden in den Behälter;
die Bereitstellung eines Materials, das in Alkohol substantiell unlöslich ist und das ein Alkali-Ion bereitstellen kann, in den Behälter;
die Veranlassung des in Alkohol unlöslichen Materials, das Alkali-Ion bereitzustellen, so dass das Alkali-Ion mit dem Alkohol reagiert, um ein Alkalialkoholat zu bilden, wobei das in Alkohol unlösliche Material dazu veranlasst wird, das Alkali-Ion bereitzustellen, indem ein elektrisches Potential über die Anode und Kathode am in Alkohol unlöslichen Material angelegt wird; und
das Zulassen, dass das Alkalialkoholat mit dem Triglyzerid reagiert, um ein Biodiesel umfassendes Gemisch zu erzeugen,

umfasst.

**2.** Verfahren nach Anspruch 1, wobei das in Alkohol unlösliche Material dazu veranlasst wird, das Alkali-Ion bereitzustellen, indem eine Behandlung erfolgt, die aus der Erhitzung des in Alkohol unlöslichen Materials und der Druckbeaufschlagung des in Alkohol unlöslichen Materials gewählt wird.

**3.** Verfahren nach Anspruch 2, wobei das Gemisch auf eine Temperatur innerhalb eines Temperaturbereichs ausgewählt aus 100°C bis 800°C, aus 200°C bis 600°C und aus 100°C bis 500°C erhitzt wird, oder wobei das Gemisch mit einem Druck innerhalb eines Druckbereichs ausgewählt aus 1 bar bis 50 bar, aus 2 bar bis 20 bar und aus 5 bar bis 10 bar beaufschlagt wird.

**4.** Verfahren nach Anspruch 3, weiterhin umfassend, dass bei einer Druckbeaufschlagung des Gemischs der das Alkali bereitstellende Katalysator veranlasst wird, Alkali-Ionen aus Alkalisalzen von Glyzerin zu entfernen, um substantiell reines Biodiesel und reines Glyzerin zu bilden, wobei vorzugsweise der das Alkali bereitstellende Katalysator einen Alkali-Superionenleiter umfasst.

**5.** Verfahren nach Anspruch 1, wobei der Alkali-Ionengehalt des in Alkohol unlöslichen Materials beim Bereitstellen des Alkali-Ions permanent verbraucht wird.

## Revendications

**1.** Procédé de production de biodiesel, ledit procédé comprenant les étapes consistant à :

fournir un conteneur comportant une seule chambre qui contient une anode et une cathode ;
placer un alcool dans le conteneur ;
placer des triglycérides dans le conteneur ;
doter le conteneur d'un matériau qui est pratiquement insoluble dans l'alcool et qui est capable de donner un ion alcalin ;
conduire le matériau insoluble dans l'alcool à donner l'ion alcalin de sorte que l'ion alcalin réagisse avec l'alcool pour former une alcoolate alcalin, ledit matériau insoluble dans l'alcool étant contraint de donner l'ion alcalin par application d'un potentiel électrique par l'intermédiaire de l'anode et de la cathode sur le matériau insoluble dans l'alcool ; et
permettre à l'alcoolate alcalin de réagir avec le triglycéride pour former une composition comprenant du biodiesel.

**2.** Procédé selon la revendication 1, ledit matériau insoluble dans l'alcool étant contraint de donner l'ion alcalin par un traitement supplémentaire choisi parmi le chauffage du matériau insoluble dans l'alcool et l'application d'une pression sur le matériau insoluble dans l'alcool.

**3.** Procédé selon la revendication 2, ladite composition étant chauffée à une température comprise dans une plage de températures choisie de 100°C et 800°C, de 200°C et 600°C, et de 100°C et 500°C, ou ladite composition étant mise sous pression dans une plage de pressions choisie de 1 bar à 50 bar, de 2 et 20, et de 5 et 10.

**4.** Procédé selon la revendication 3 comprenant en outre lorsque la composition est sous pression l'étape consistant à permettre au catalyseur donneur alcalin d'enlever les ions alcalins de sels alcalins de glycérine pour former un

biodiesel pratiquement pur et de la glycérine pure, de préférence ledit catalyseur donneur alcalin comprenant un supraconducteur d'ions alcalins.

5. Procédé selon la revendication 1, le contenu en ions alcalins dudit matériau insoluble dans l'alcool étant définitivement consommé étant donné qu'il donne l'ion alcalin.

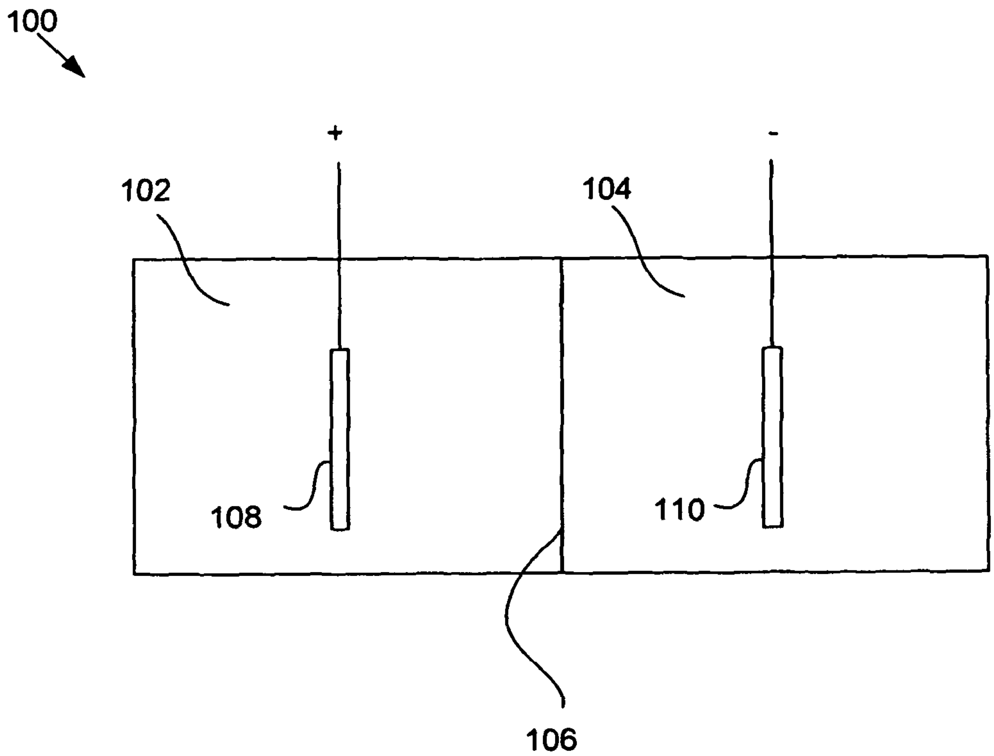


Fig. 1
Prior Art

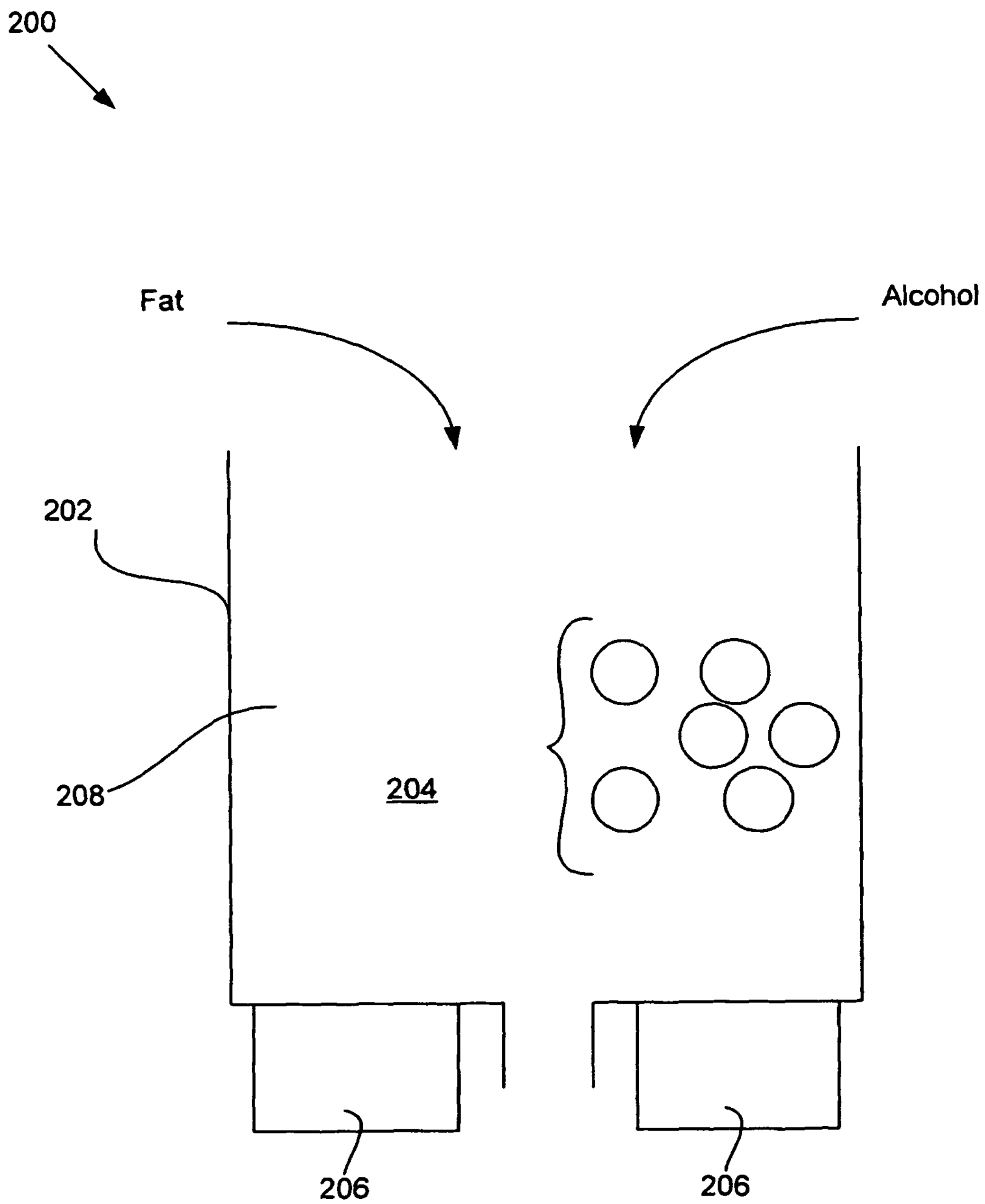


Fig. 2

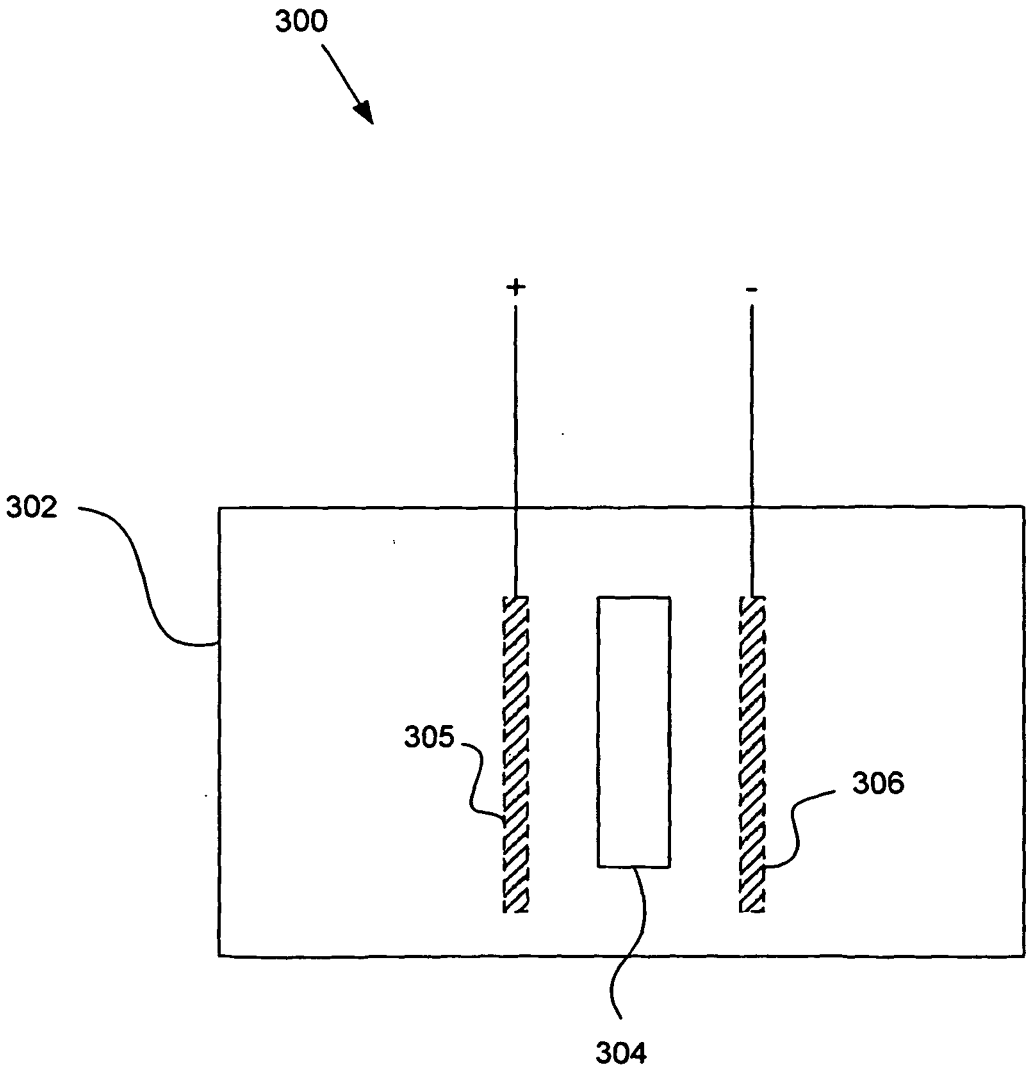


Fig. 3

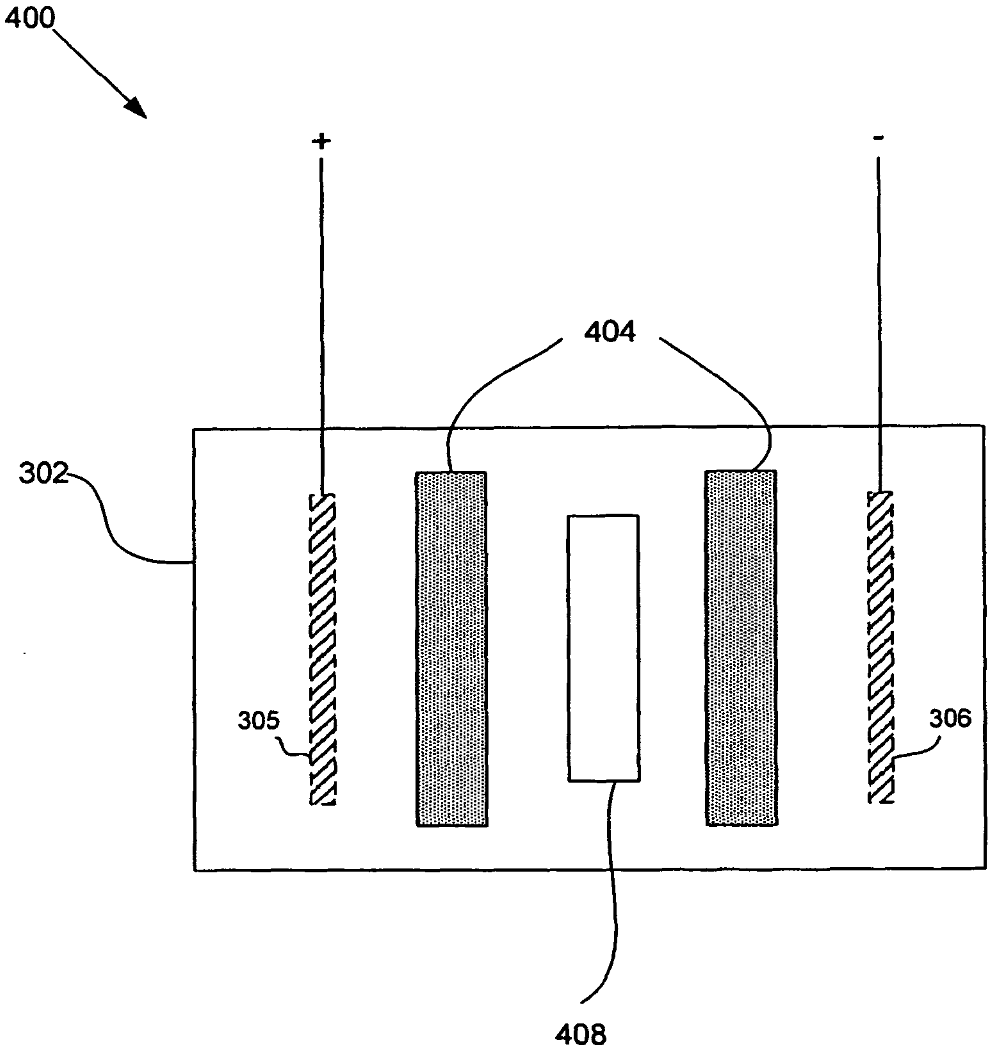


Fig. 4

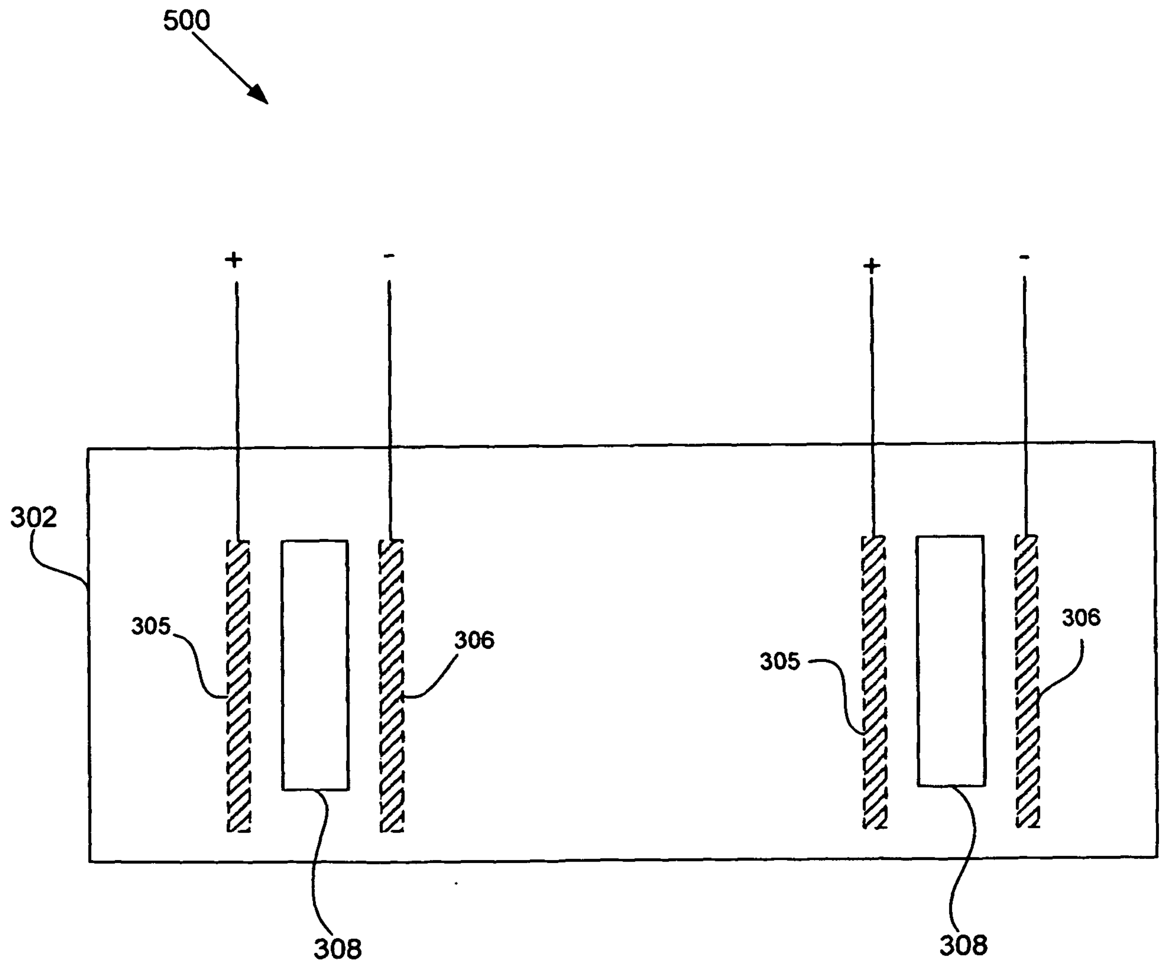


Fig. 5

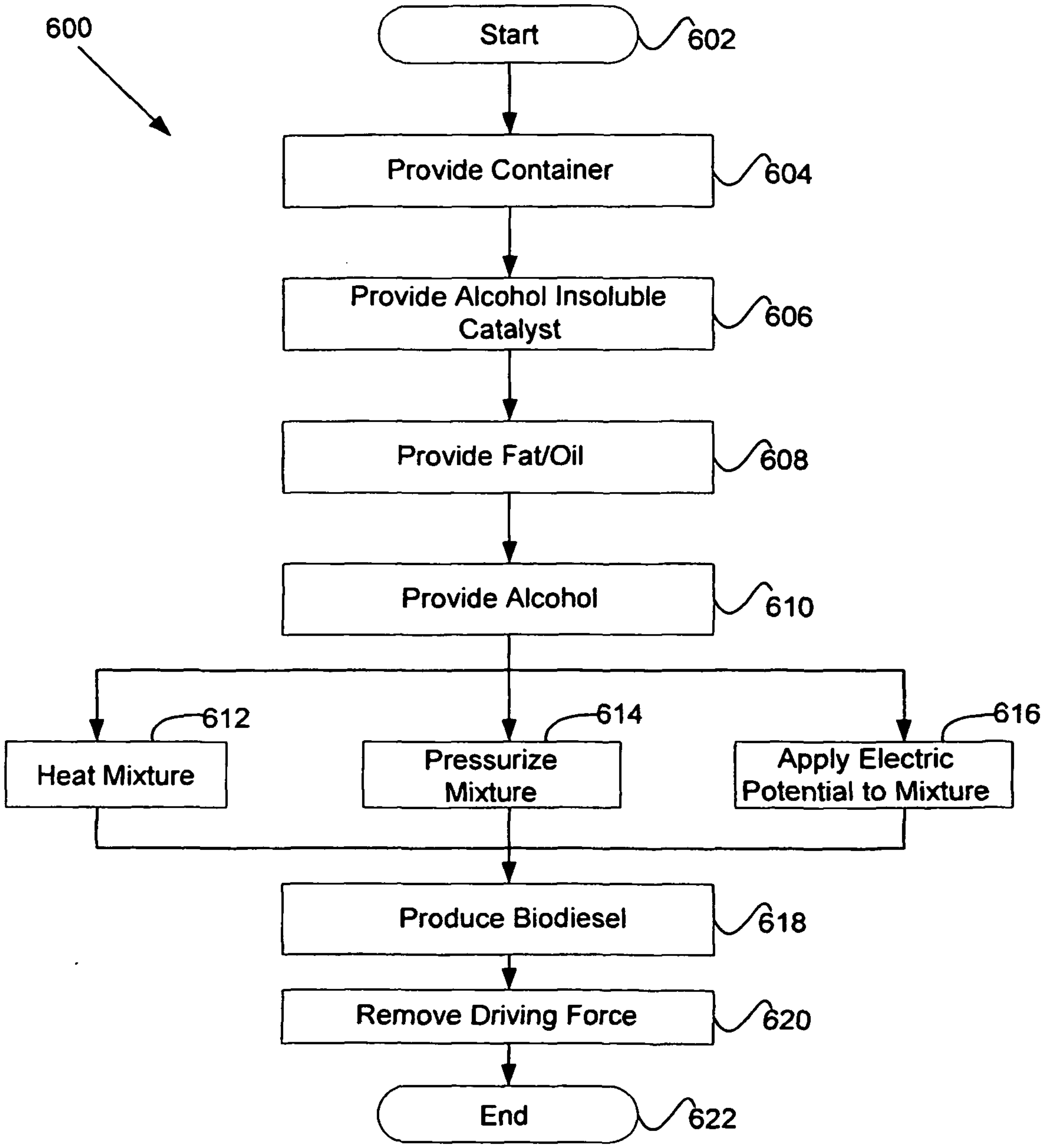
600
Start
602
Provide Container
604
Provide Alcohol Insoluble Catalyst
606
Provide Fat/Oil
608
Provide Alcohol
610
Heat Mixture
612
Pressurize Mixture
614
Apply Electric Potential to Mixture
616
Produce Biodiesel
618
Remove Driving Force
620
End
622

Fig. 6

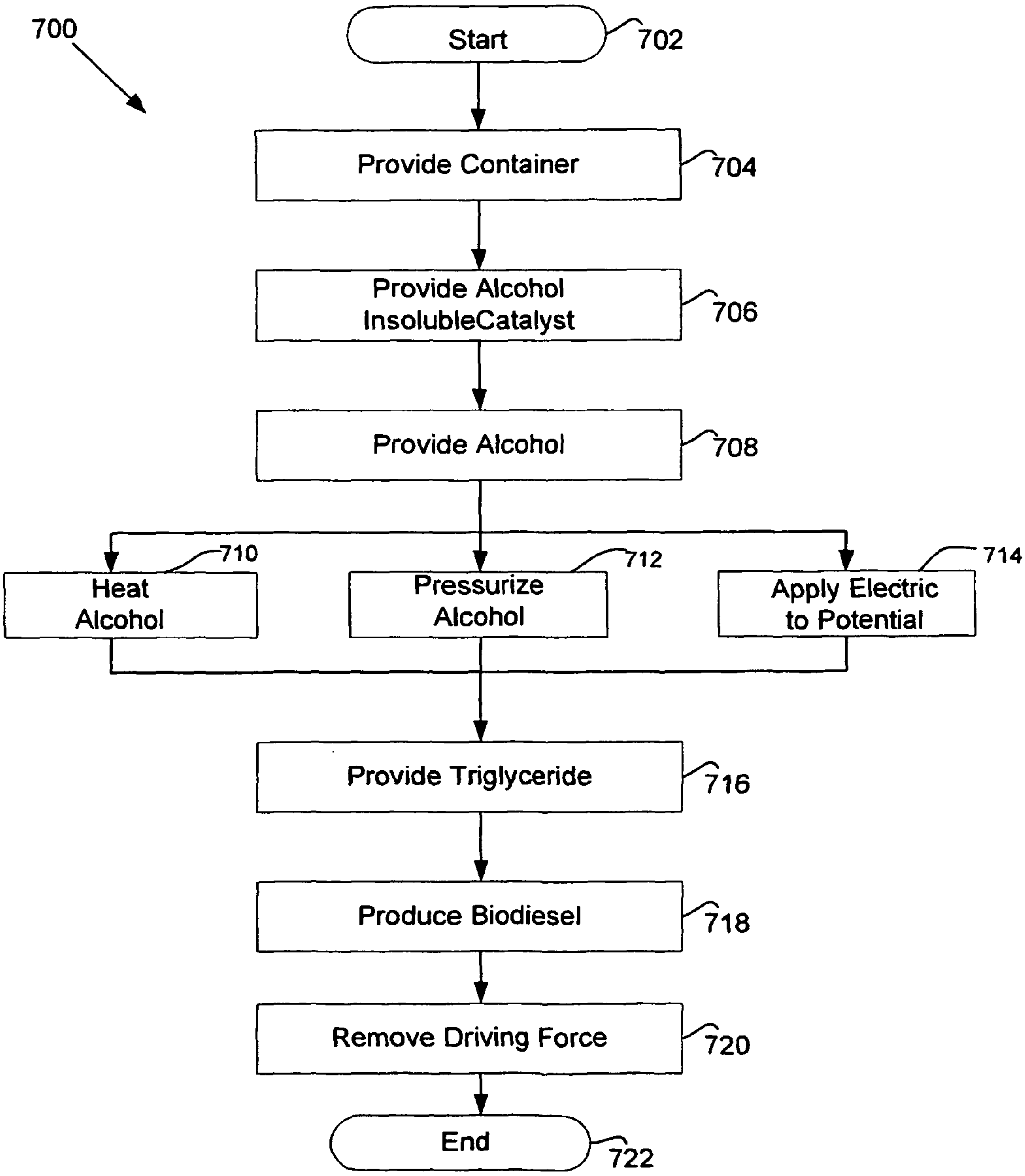
700
Start
702
Provide Container
704
Provide Alcohol
InsolubleCatalyst
706
Provide Alcohol
708
Heat
Alcohol
710
Pressurize
Alcohol
712
Apply Electric
to Potential
714
Provide Triglyceride
716
Produce Biodiesel
718
Remove Driving Force
720
End
722

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080173551 A
- US 20070158205 A


### Non-patent literature cited in the description


- **H. Y-P. HONG.** Crystal Structure and Crystal Chemistry in the System Na1+xZr1SixP3-xO. *Mat. Res. Bull,* 1976, vol. 11, 173-182